# EUROPEAN PATENT SPECIFICATION

(11) **EP 1 565 052 B1**
(45) Date of publication and mention of the grant of the patent: **02.11.2006**
(21) Application number: 03780648.6
(22) Date of filing: 24.11.2003
(51) Int. Cl.: A01G 9/24

(54) **GREENHOUSE AND METHOD OF CULTIVATION UNDER GLASS**
GEWÄCHSHAUS UND KULTURVERFAHREN UNTER GLAS
SERRE ET PROCEDE DE CULTURE SOUS VERRE

(30) Priority: 29.11.2002 IT TO20021037
(43) Date of publication of application: 24.08.2005
(73) Proprietor: C.R.F. Società Consortile per Azioni, 10043 Orbassano (TO) (IT)
(72) Inventor: LO PRESTI, Giulio, I-55049 Viareggio (IT); MENARDI, Luca, I-12020 Madonna Dell'Olmo (IT)
(74) Representative: Jorio, Paolo
(86) International application number: PCT/IT2003/000769
(87) International publication number: WO 2004/049783

(56) References cited:
- DE-A- 3 327 896
- DE-A- 3 332 499
- DE-A- 3 423 574
- FR-A- 2 752 613
- DATABASE WPI Section Ch, Week 199832 Derwent Publications Ltd., London, GB; Class D15, AN 1998-375704 XP002239269 & RU 2 099 289 C (KASHEVAROV YU B) 20 December 1997 (1997-12-20)

## Description

### TECHNICAL FIELD

The present invention relates to a greenhouse and to a method of cultivation under glass.

### BACKGROUND ART

As is known, greenhouses are closed environments, usually delimited by glazed walls, where plants are cultivated in special climatic conditions.

When greenhouses are installed in regions with a particularly dry and arid climate, the cultivation of most plants requires a considerable input of irrigation water, the provision of which can be a major problem in arid regions. See e.g. DE 3 423 574 A.

In coastal areas, it has been proposed that suitably desalinated sea water be used for irrigation: however, since the quantity of water required is usually large, as mentioned above, the installations required to produce fresh water from sea water are relatively complicated, expensive and bulky, and are therefore not suitable, for example, for the production of small greenhouses which are self-sufficient in terms of their fresh water requirement.

### DISCLOSURE OF INVENTION

An object of the present invention is therefore to provide a greenhouse and a cultivation method applicable to this greenhouse which enable the aforementioned problems to be overcome.

In particular, an object of the invention is to provide a greenhouse having an air humidifier which, by increasing the humidity of the air within the greenhouse, makes it possible to reduce the quantity of irrigation water required for the plants.

Another object of the invention is to provide a greenhouse which has an irrigation system in which the water required for irrigation is obtained, in a simple and economical way, from sea water.

The present invention therefore relates to a greenhouse and to a method of cultivation under glass as specified in the attached Claims 1 and 13 respectively.

Preferred embodiments of the greenhouse and of the method of cultivation according to the invention are also specified, in dependent Claims 2 to 12 and 14 to 23 respectively.

The greenhouse according to the invention and the method of cultivation made possible by this greenhouse resolve the aforementioned problems of the prior art. This is because the air introduced into the greenhouse has a high relative humidity, which may reach approximately 90%, and, if required, a temperature which may be significantly lower than the external temperature: in these conditions, the quantity of water required to irrigate the plants is considerably reduced. Moreover, the irrigation water is obtained, in a simple and economical way, from the sea water which is also used to humidify the air. Consequently, the greenhouse requires no external inputs of fresh water.

### BRIEF DESCRIPTION OF THE DRAWINGS

Further characteristics and advantages of the present invention will be made clear by the following description of a non-restrictive example of embodiment of the invention, with reference to the figures of the attached drawings, in which:
- Figure 1 is a schematic view of a greenhouse made according to the invention;
- Figure 2 is an enlarged schematic view of a humidifier used in the greenhouse of Figure 1;
- Figure 3 is an enlarged schematic view of a detail of the humidifier of Figure 2;
- Figure 4 is an enlarged partial schematic view of a condenser used in the greenhouse of Figure 1.

### BEST MODE FOR CARRYING OUT THE INVENTION

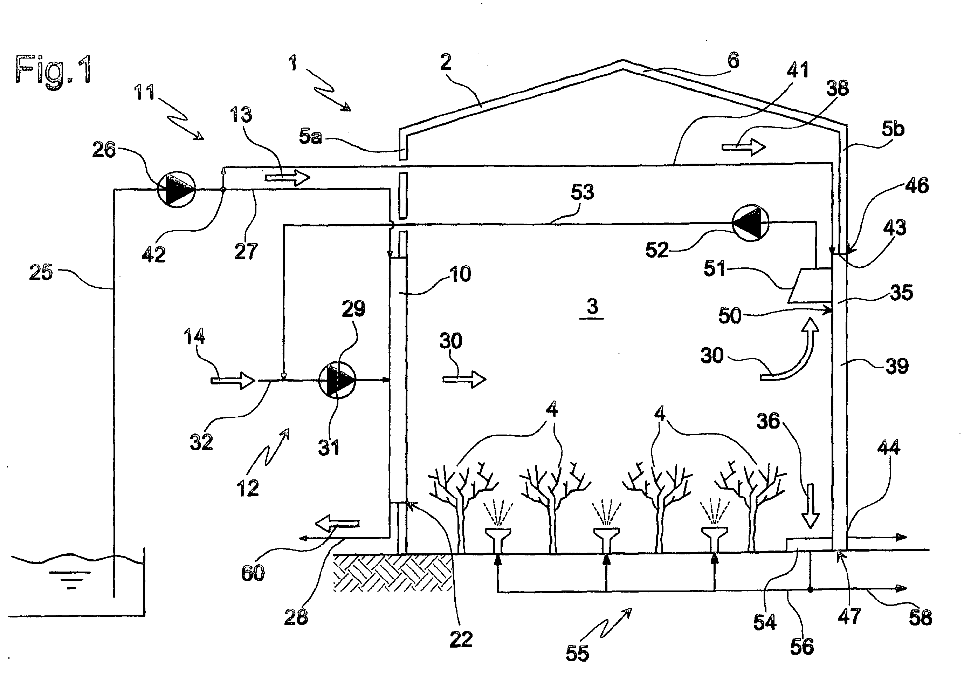

With reference to Figure 1, a greenhouse 1 comprises a structure 2 delimiting a growing environment 3 in which plants 4 are placed. The structure 2 comprises lateral walls 5 which rise vertically from the ground, and a roof 6.

The greenhouse 1 comprises an air humidifier 10 and supply means 11 and 12 for bringing a flow of water 13 and a flow of air 14 respectively to the humidifier 10.

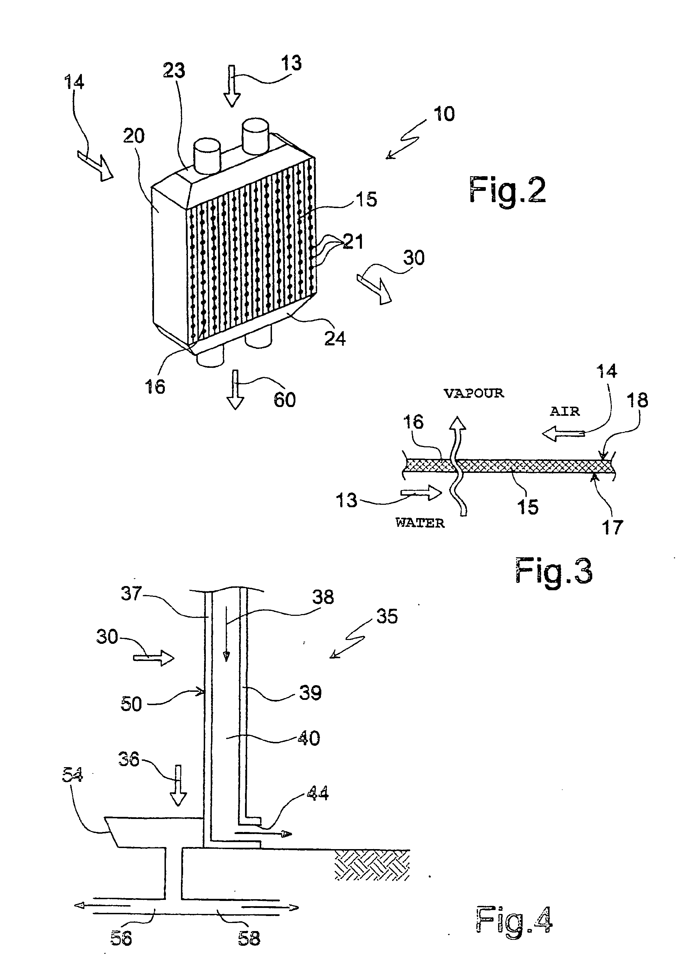

With additional reference to Figures 2 and 3, the humidifier 10 comprises at least one exchange element 15 having a semi-permeable membrane 16 which is of a known type and which allows water vapour to pass between its opposite sides 17 and 18, through the said membrane, if there is a vapour pressure gradient between these sides 17 and 18.

In particular, the membrane 16 which is used is of the type which allows the water vapour to pass in one direction only, but which retains the sea salts and other substances; if, therefore, the sides 17 and 18 of the membrane 16 are in contact, respectively, with a saline aqueous solution, for example sea water, and with a flow of air of low relative humidity, water vapour passes from the saline aqueous solution to the air flow, as shown schematically in Figure 3.

Good results have been obtained by using polypropylene (PP) membranes having a water vapour resistance RET (determined according to UNI EN 31092) in the range from approximately 2 to approximately 5, preferably from approximately 3 to approximately 4, and in particular in the region of approximately 3.4 [10⁻² mbar m²/W]. It should be understood that other known membranes having similar characteristics to those quoted can be used.

In the non-restrictive present case which is illustrated, the humidifier 10 comprises a frame 20 which supports the membrane 16, this membrane 16 being shaped in such a way as to form a plurality of compartments 21, constituting corresponding exchange elements 15; each exchange element 15 is delimited by a portion of membrane 16 interposed between the flow of water 13 (sea water), circulating within the exchange element 15, and the flow of air 14, which is in contact with the exterior of the exchange element 15.

The frame 20 is accommodated in an open-ended housing 22 formed in a wall 5a of the greenhouse 1, and carries, at its opposing upper and lower ends respectively, an intake guide 23, which distributes the flow of water 13 to the exchange elements 15, and an outlet guide 24, which collects the water which has passed through the exchange elements 15.

The supply means 11 comprise a hydraulic circuit 25 provided with a circulation pump 26 to carry the flow of water 13 to the humidifier 10 and, in particular, into the exchange elements 15.

The hydraulic circuit 25 comprises an intake line 25 and an outlet line 28, positioned, respectively, up-line and down-line from the humidifier 10, and connected, respectively, to the intake guide 23 and to the outlet guide 24 of the humidifier 10. The flow of water 13 supplied to the humidifier 10 is a flow of salt water, particularly sea water or brackish water, drawn from the sea at a suitable depth by means of the hydraulic circuit 25.

The supply means 12 comprise forced ventilation means 29 for carrying the air flow 14 to the humidifier 10 and for introducing humidified air 30 into the greenhouse 1; in the present case, the forced ventilation means 29 comprise a fan 31 by means of which the flow of air 14 is taken from outside the greenhouse 1 and sent, through a delivery duct 32, to the humidifier 10 and, in particular, sent to make contact with the exterior of the exchange elements 15.

The greenhouse 1 also comprises a condenser 35 for condensing the water vapour present in the humidified air 30 introduced into the greenhouse 1, to obtain condensate 36.

The condenser 35 comprises at least one heat exchange element 37 between the humidified air 30 taken from the growing environment 3 and a cooling fluid 38 having a temperature lower than the temperature of the humidified air 30.

In the present, non-restrictive, case illustrated in Figure 1, and in greater detail in Figure 4, the condenser 35 is incorporated in a wall 5b of the greenhouse 1, opposite the wall 5a provided with the humidifier 10: the condenser 35 and the humidifier 10 are therefore located at opposite ends of the greenhouse 1.

The wall 5b has at least one wall portion 39 having a cavity 40 in which the cooling fluid 38 circulates; the cooling fluid 38 suitably consists of a portion of the flow of water 13 taken up-line from the humidifier 10 and sent into the cavity 40 through a branch circuit 41; the branch circuit 41 is connected to the intake line 27 of the hydraulic circuit 25 by a connector 42. The cavity 40 is provided with an intake 43 and an outlet 44, positioned at opposite ends 46 and 47 respectively, located respectively at the top and the bottom, of the wall portion 39, for the cooling fluid 38.

An inner face 50 of the wall portion 38, facing the interior of the greenhouse 1, forms a heat exchange surface between the cooling fluid 38 circulating in the cavity 40 and the humidified air 30 present within the greenhouse 1 (in other words in the growing environment 3) .

At the upper end 46 of the wall portion 39 and above the heat exchange surface 50 there is positioned a suction hood 51 provided with a fan 52 to create a forced circulation of air within the greenhouse 1 and, specifically, to carry the humidified air 30, introduced into the growing environment 3 through the humidifier 10, to the condenser 35, in other words into contact with the heat exchange surface 50. The hood 51 is connected by a recirculation duct 53 to the delivery duct 32.

At the lower end 47 of the wall portion 39 there is positioned a collector 54 to collect the condensate 36 which has formed on the exchange surface 50 and has fallen downwards under the effect of gravity; the collector 54 is connected to an irrigation system 55 of any known type (which, for the sake of simplicity, is not described or illustrated in detail) by a duct 56.

The greenhouse 1 is used for the application of the method of cultivation according to the invention as described below.

The flow of water 13 is taken from the sea and sent to the humidifier 10 by the hydraulic circuit 25; the flow of air 14 is drawn in from the outside and supplied to the humidifier 10 by the fan 31: the vapour pressure of the flow of air 14 is lower than the vapour pressure of the flow of water 13, and therefore water vapour passes in the humidifier 10 from the flow of water 13 to the flow of air 14 through the membrane 16.

Advantageously, the flow of water 13 is supplied to the humidifier 10 at a temperature lower than the temperature of the flow of air 14, in such a way as to cool, as well as humidify, the flow of air 14; the cooling of the flow of air 14 is further promoted by the latent heat of evaporation of the said flow of air 14.

The humidified air 30 introduced into the greenhouse 1 is moved by the fan 52 and brought to the condenser 35: the heat exchange between the humidified air 30 and the cooling fluid 38, whose temperature is lower than the temperature of the humidified air 30, causes the condensation of the water vapour present in the humidified air 30 on the exchange surface 53; the resulting condensate 36 is fresh water, which is collected by the collector 54 and sent to the irrigation system 55.

Any condensate 36 in excess of the amount required for irrigation can be drawn off by a branch 58 and stored or sent for other uses.

The fans 29 and 52 cause a forced circulation of the air in the greenhouse 1: the steps of humidification and condensation are therefore essentially carried out continuously and simultaneously in the humidifier 10 and in the condenser 35 respectively, at the opposite ends of the greenhouse 1.

After giving up some of its humidity, the air leaving the condenser 35 has a water vapour content in excess of that of the outside air and a relatively low temperature, and it is therefore recirculated by means of the recirculation duct 53 to the humidifier 10. In a possible variant which is not illustrated, this air, before being recirculated to the humidifier 10, is sent into a cavity formed under or within the roof 6, in such a way that it has a cooling and thermally insulating effect on the said roof 6.

A flow of salt water 60 with a high saline concentration is taken from the humidifier 10, and can be sent, for example, to a salt production plant, or to another desalination device for producing additional fresh water.

Finally, it is clear that the greenhouse and method of cultivation under glass described and illustrated herein can be modified and varied in numerous ways without departing from the present invention as defined in the attached claims.

## Claims

1. Greenhouse (1) comprising a structure (2) delimiting a growing environment (3), and an air humidifier (10) comprising at least one exchange element (15), **characterized in that** said at least one exchange element has a semi-permeable membrane (16), which allows water vapour to pass between opposite sides (17, 18) of the membrane if there is a vapour pressure gradient between the said sides, and **in that** the greenhouse also comprises first and second supply means (11, 12) for bringing a flow of water (13) and a flow of air (14) respectively into contact with the said opposite sides of the membrane.

2. Greenhouse according to Claim 1, **characterized in that** the said first supply means (11) comprise a hydraulic circuit (25) for bringing the said flow of water (13) into contact with a first side (17) of the membrane (16).

3. Greenhouse according to Claim 1 or 2, **characterized in that** the said flow of water (13) is a flow of sea water.

4. Greenhouse according to one of Claims 1 to 3, **characterized in that** the said second supply means (12) comprise forced ventilation means (29) for bringing the said flow of air (14) into contact with a second side (18) of the membrane (16) and introducing the humidified air (30) leaving the said humidifier (10) into the greenhouse.

5. Greenhouse according to one of the preceding claims, **characterized in that** the said humidifier (10) comprises a plurality of exchange elements (15), each exchange element (15) being delimited by a portion of semi-permeable membrane (16) interposed between the said flow of water (13), circulating within the exchange element (15), and the said flow of air (14), which is in contact with the exterior of the exchange element (15).

6. Greenhouse according to Claim 5, **characterized in that** the said semi-permeable membrane (16) is shaped in such a way as to form a plurality of compartments (21) constituting corresponding exchange elements (15), the compartments (21) having the said flow of water (13) running within them and having the said flow of air (14) in contact with their exteriors.

7. Greenhouse according to one of the preceding claims, **characterized in that** it comprises a condenser (35) for condensing the water vapour present in the humidified air (30) introduced into the greenhouse and for obtaining condensate (36).

8. Greenhouse according to Claim 7, **characterized in that** the said condenser (35) and the said humidifier (10) are positioned at opposite ends of the greenhouse, forced ventilation means (29, 52) being provided to keep the air in forced circulation between the said ends of the greenhouse.

9. Greenhouse according to Claim 7 or 8, **characterized in that** the said condenser (35) is connected to irrigation means (55) for distributing the condensate (36) to the plants placed in the greenhouse.

10. Greenhouse according to one of Claims 7 to 9, **characterized in that** it comprises recirculation means (53) for recirculating the air leaving the condenser (35) and supplying it to the humidifier (10).

11. Greenhouse according to one of Claims 7 to 10, **characterized in that** the condenser (35) comprises at least one heat exchange element (37) between the humidified air (30) taken from the greenhouse and a cooling fluid (38) having a temperature lower than the temperature of the humidified air (30) within the greenhouse.

12. Greenhouse according to Claim 11, **characterized in that** it comprises a branch circuit (41) for taking the said cooling fluid (38) from the said flow of water (13) up-line from the said humidifier (10).

13. Method of cultivation under glass, comprising the steps of:
- providing a greenhouse (1) with an air humidifier (10) comprising at least one exchange element (15) having a semi-permeable membrane (16) which allows water vapour to pass between opposite sides (17, 18) of the membrane if there is a vapour pressure gradient between the said sides;
- humidifying a flow of air (14) by the exchange of water vapour between a flow of water (13) and the said flow of air, the flow or air and the flow of water being brought into contact with opposite sides (17) and (18) respectively of the membrane (16);
- introducing the humidified air (30) leaving the humidifier (1) into the greenhouse.

14. Method according to Claim 13, **characterized in that** it comprises a step of causing a forced circulation of the air in the greenhouse.

15. Method according to Claim 13 or 14, **characterized in that** the said flow of air (14) is supplied to the humidifier (10) with a vapour pressure lower than the vapour pressure of the said flow of water (13).

16. Method according to one of Claims 13 to 15, **characterized in that** the said flow of water (13) is supplied to the said humidifier (10) at a temperature lower than the temperature of the said flow of air (14).

17. Method according to one of Claims 13 to 16, **characterized in that** the said flow of water (13) is a flow of sea water.

18. Method according to one of Claims 13 to 17, **characterized in that** it comprises a condensation step, in which the water vapour present in the humidified air (30) introduced into the greenhouse is condensed in a condenser (35) to produce condensate (36).

19. Method according to Claim 18, **characterized in that** the said condensation step comprises a step of heat exchange between the humidified air (30) taken from the greenhouse and a cooling fluid (38) having a temperature lower than the temperature of the said humidified air.

20. Method according to Claim 19, **characterized in that** the said cooling fluid (38) is taken from the said flow of water (13) up-line from the said humidifier (10).

21. Method according to one of Claims 18 to 20, **characterized in that** the said humidification step and the said condensation step are carried out in an essentially continuous and simultaneous way at opposite ends of the greenhouse.

22. Method according to one of Claims 18 to 21, **characterized in that** it comprises a step of irrigating the plants placed in the greenhouse with the condensate.

23. Method according to one of Claims 18 to 22, **characterized in that** it comprises a recirculation step, in which the air leaving the condenser (35) is collected and supplied to the humidifier (10).

24. Method according to one of Claims 18 to 23, **characterized in that** the air leaving the condenser (35) is sent to cool a roof (6) of the greenhouse.

## Patentansprüche

1. Gewächshaus (1) mit einem Aufbau (2), der eine Wachstumsumgebung (3) begrenzt, und einem Luftbefeuchter (10) mit zumindest einem Austauschelement (15),
**dadurch gekennzeichnet,**
**dass** das zumindest eine Austauschelement (15) eine semi-permeable Membran (16) aufweist, die es ermöglicht, dass Wasserdampf zwischen gegenüberliegenden Seiten (17, 18) der Membran hindurch tritt, wenn ein Dampfdruckgradient zwischen den Seiten vorliegt, und dass das Gewächshaus auch erste und zweite Zuführungsmittel (11, 12) aufweist, um einen Wasserstrom (13) und einen Luftstrom (14) jeweils mit den gegenüberliegenden Seiten der Membran in Kontakt zu bringen.

2. Gewächshaus nach Anspruch 1,
**dadurch gekennzeichnet,**
**dass** die ersten Zuführungsmittel (11) einen hydraulischen Kreislauf (25) aufweisen, um den Wasserstrom (13) mit einer ersten Seite (17) der Membran (16) in Kontakt zu bringen.

3. Gewächshaus nach Anspruch 1 oder 2,
**dadurch gekennzeichnet,**
**dass** der Wasserstrom (13) ein Meerwasserstrom ist.

4. Gewächshaus nach einem der Ansprüche 1 bis 3,
**dadurch gekennzeichnet,**
**dass** die zweiten Zuführungsmittel (12) Zwangsbelüftungsmittel (29) aufweisen, um den Luftstrom (14) mit einer zweiten Seite (18) der Membran (16) in Kontakt zu bringen, und die befeuchtete Luft (30), die den Befeuchter (10) verlässt, in das Gewächshaus einzuleiten.

5. Gewächshaus nach einem der vorhergehenden Ansprüche,
**dadurch gekennzeichnet,**
**dass** der Befeuchter (10) eine Mehrzahl von Austauschelementen (15) aufweist, wobei jedes Austauschelement (15) durch einen Bereich einer semipermeablen Membran (16) begrenzt ist, die zwischen dem Wasserstrom (13), der innerhalb des Austauschelementes (15) umgewälzt wird, und dem Luftstrom (14), der mit dem Äußeren des Austauschelementes (15) in Kontakt ist, angeordnet ist.

6. Gewächshaus nach Anspruch 5,
**dadurch gekennzeichnet,**
**dass** die semi-permeable Membran (16) derart geformt ist, um eine Mehrzahl an Abteilungen (21) auszubilden, die entsprechende Austauschelemente (15) bilden, wobei die Abteilungen (21) den darin verlaufenden Wasserstrom (13) und den mit ihren Außenbereichen in Kontakt stehenden Luftstrom (14) enthalten.

7. Gewächshaus nach einem der vorhergehenden Ansprüche,
**dadurch gekennzeichnet,**
**dass** es einen Kondensatorkühler (35) aufweist, um den in der befeuchteten Luft (30), die in das Gewächshaus eingeleitet wurde, vorliegenden Wasserdampf zu kondensieren und um Kondensat (36) zu erhalten.

8. Gewächshaus nach Anspruch 7,
**dadurch gekennzeichnet,**
**dass** der Kondensatorkühler (35) und der Befeuchter (10) an gegenüberliegenden Enden des Gewächshauses angeordnet sind, wobei Zwangsbelüftungsmittel (29, 52) vorgesehen sind, um die Luft in erzwungener Umwälzung zwischen den Enden des Gewächshauses zu halten.

9. Gewächshaus nach Anspruch 7 oder 8,
**dadurch gekennzeichnet,**
**dass** der Kondensatorkühler (35) mit Bewässerungsmitteln (55) verbunden ist, um das Kondensat (36) an die in dem Gewächshaus angeordneten Pflanzen zu verteilen.

10. Gewächshaus nach einem der Ansprüche 7 bis 9,
**dadurch gekennzeichnet,**
**dass** es Umwälzmittel (53) aufweist, um die den Kondensatorkühler (35) verlassende Luft wieder umzuwälzen und sie dem Befeuchter (10) zuzuführen.

11. Gewächshaus nach einem der Ansprüche 7 bis 10,
**dadurch gekennzeichnet,**
**dass** der Kondensatorkühler (35) zumindest ein Wärmeaustauschelement (37) zwischen der aus dem Gewächshaus entnommenen befeuchteten Luft (30) und einem Kühlfluid (38), das eine Temperatur aufweist, die niedriger ist als die Temperatur der befeuchteten Luft (30) innerhalb des Gewächshauses, aufweist.

12. Gewächshaus nach Anspruch 11,
**dadurch gekennzeichnet,**
**dass** es eine Abzweigleitung (41) aufweist, um das Kühlfluid (38) aus dem Wasserstrom (13) zuleitungsseitig von dem Befeuchter (10) zu entnehmen.

13. Verfahren zur Pflanzenzucht unter Glas, mit den Schritten:
- Bereitstellen eines Gewächshauses (1) mit einem Luftbefeuchter (10) mit zumindest einem Austauschelement (15), das eine semi-permeable Membran (16) aufweist, die Wasserdampf zwischen gegenüberliegenden Seiten (17, 18) der Membran hindurchtreten lässt, falls zwischen den Seiten ein Dampfdruckgradient vorliegt;
- Befeuchten eines Luftstromes (14) durch den Austausch von Wasserdampf zwischen einem Wasserstrom (13) und dem Luftstrom, wobei der Luftstrom und der Wasserstrom mit gegenüberliegenden Seiten (17) beziehungsweise (18) der Membran (16) in Kontakt gebracht werden;
- Einleiten der befeuchteten Luft (30), die den Befeuchter (1) verlässt, in das Gewächshaus.

14. Verfahren nach Anspruch 13,
**dadurch gekennzeichnet,**
**dass** es einen Schritt aufweist, eine erzwungene Luftumwälzung in dem Gewächshaus zu bewirken.

15. Verfahren nach Anspruch 13 oder 14,
**dadurch gekennzeichnet,**
**dass** der Luftstrom (14) dem Befeuchter (10) mit einem Dampfdruck zugeführt wird, der niedriger ist als der Dampfdruck des Wasserstroms (13).

16. Verfahren nach einem der Ansprüche 13 bis 15,
**dadurch gekennzeichnet,**
**dass** der Wasserstrom (13) dem Befeuchter (10) bei einer Temperatur zugeführt wird, die niedriger ist als die Temperatur des Luftstroms (14).

17. Verfahren nach einem der Ansprüche 13 bis 16,
**dadurch gekennzeichnet,**
**dass** der Wasserstrom (13) ein Meerwasserstrom ist.

18. Verfahren nach einem der Ansprüche 13 bis 17,
**dadurch gekennzeichnet,**
**dass** es einen Kondensationsschritt aufweist, bei dem der in der befeuchteten Luft (30), die in das Gewächshaus eingeleitet wird, vorhandene Wasserdampf in einem Kondensatorkühler (35) kondensiert wird, um Kondensat (36) zu erzeugen.

19. Verfahren nach Anspruch 18,
**dadurch gekennzeichnet,**
**dass** der Kondensationsschritt einen Schritt des Wärmeaustausches zwischen der befeuchteten Luft (30), die aus dem Gewächshaus entnommen wird, und einem Kühlfluid (38), das eine Temperatur aufweist, die niedriger ist als die Temperatur der befeuchteten Luft, aufweist.

20. Verfahren nach Anspruch 19,
**dadurch gekennzeichnet,**
**dass** das Kühlfluid (38) aus dem Wasserstrom (13) zuleitungsseitig von dem Befeuchter (10) entnommen wird.

21. Verfahren nach einem der Ansprüche 18 bis 20,
**dadurch gekennzeichnet,**
**dass** der Befeuchtungsschritt und der Kondensationsschritt auf eine im Wesentlichen kontinuierliche und gleichzeitige Weise an gegenüberliegenden Enden des Gewächshauses durchgeführt werden.

22. Verfahren nach einem der Ansprüche 18 bis 21,
**dadurch gekennzeichnet,**
**dass** es einen Schritt der Bewässerung der in dem Gewächshaus angeordneten Pflanzen mit dem Kondensat aufweist.

23. Verfahren nach einem der Ansprüche 18 bis 22,
**dadurch gekennzeichnet,**
**dass** es einen Umwälzungsschritt aufweist, bei dem die den Kondensatorkühler (35) verlassende Luft aufgefangen und dem Befeuchter (10) zugeführt wird.

24. Verfahren nach einem der Ansprüche 18 bis 23,
**dadurch gekennzeichnet,**
**dass** die Luft, die den Kondensatorkühler (35) verlässt, weitergeleitet wird, um ein Dach (6) des Gewächshauses zu kühlen.

## Revendications

1. Serre (1), comprenant une structure (2) délimitant un environnement de croissance (3), et un humidificateur d'air (10) comprenant au moins un élément d'échange (15), **caractérisée en ce que** ledit au moins un élément d'échange comporte une membrane semi-perméable (16) qui permet à la vapeur d'eau de passer entre les côtés opposés (17, 18) de la membrane s'il existe un gradient de pression de vapeur entre lesdits côtés, et **en ce que** la serre comprend également des premier et second moyens d'alimentation (11, 12) destinés à mettre un écoulement d'eau (13) et un écoulement d'air (14) respectivement en contact avec lesdits côtés opposés de la membrane.

2. Serre selon la revendication 1, **caractérisée en ce que** lesdits premiers moyens d'alimentation (11) comprennent un circuit hydraulique (25) destiné à mettre ledit écoulement d'eau (13) en contact avec un premier côté (17) de la membrane (16).

3. Serre selon la revendication 1 ou 2, **caractérisée en ce que** ledit écoulement d'eau (13) est un écoulement d'eau de mer.

4. Serre selon l'une des revendications 1 à 3, **caractérisée en ce que** lesdits seconds moyens d'alimentation (12) comprennent des moyens de ventilation forcée (29) destinés à mettre ledit écoulement d'air (14) en contact avec un second côté (18) de la membrane (16) et à introduire l'air humidifié (30) quittant ledit humidificateur (10) à l'intérieur de la serre.

5. Serre selon l'une des revendications précédentes, **caractérisée en ce que** ledit humidificateur (10) comprend une pluralité d'éléments d'échange (15), chaque élément d'échange (15) étant délimité par une partie de membrane semi-perméable (16) interposée entre ledit écoulement d'eau (13) circulant à l'intérieur de l'élément d'échange (15), et ledit écoulement d'air (14) qui est en contact avec l'extérieur de l'élément d'échange (15).

6. Serre selon la revendication 5, **caractérisée en ce que** ladite membrane semi-perméable (16) est façonnée de manière à former une pluralité de compartiments (21) constituant des éléments d'échange correspondants (15), les compartiments (21) ayant ledit écoulement d'eau (13) s'écoulant à l'intérieur de ceux-ci et ayant ledit écoulement d'air (14) en contact avec leurs extérieurs.

7. Serre selon l'une des revendications précédentes, **caractérisée en ce qu'**elle comprend un condenseur (35) destiné à condenser la vapeur d'eau présente dans l'air humidifié (30) introduit dans la serre et à obtenir un condensat (36).

8. Serre selon la revendication 7, **caractérisée en ce que** ledit condenseur (35) et ledit humidificateur (10) sont positionnés à des extrémités opposées de la serre, des moyens de ventilation forcée (29, 52) étant procurés pour maintenir l'air en circulation forcée entre lesdites extrémités de la serre.

9. Serre selon la revendication 7 ou 8, **caractérisée en ce que** ledit condenseur (35) est relié à des moyens d'irrigation (55) destinés à distribuer le condensat (36) aux plantes positionnées dans la serre.

10. Serre selon l'une des revendications 7 à 9, **caractérisée en ce qu'**elle comprend des moyens de recirculation (53) destinés à recirculer l'air quittant le condenseur (35) et à l'acheminer vers l'humidificateur (10).

11. Serre selon l'une des revendications 7 à 10, **caractérisée en ce que** le condenseur (35) comprend au moins un élément d'échange de chaleur (37) entre l'air humidifié (30) extrait de la serre et un fluide de refroidissement (38) ayant une température inférieure à la température de l'air humidifié (30) se trouvant à l'intérieur de la serre.

12. Serre selon la revendication 11, **caractérisée en ce qu'**elle comprend un circuit de dérivation (41) destiné à emporter ledit fluide de refroidissement (38) depuis ledit écoulement d'eau (13) en amont dudit humidificateur (10).

13. Procédé de culture sous verre, comprenant les étapes consistant à :
munir une serre (1) d'un humidificateur d'air (10) comprenant au moins un élément d'échange (15) ayant une membrane semi-perméable (16) qui permet à la vapeur d'eau de passer entre les côtés opposés (17, 18) de la membrane s'il y a un gradient de pression de vapeur entre lesdits côtés ;
humidifier un écoulement d'air (14) par échange de vapeur d'eau entre un écoulement d'eau (13) et ledit écoulement d'air, l'écoulement d'air et l'écoulement d'eau étant mis en contact avec les côtés opposés (17) et (18) respectivement de la membrane (16) ;
introduire l'air humidifié (30) sortant de l'humidificateur (1) dans la serre.

14. Procédé selon la revendication 13, **caractérisé en ce qu'**il comprend une étape consistant à provoquer une circulation forcée de l'air dans la serre.

15. Procédé selon la revendication 13 ou 14, **caractérisé en ce que** ledit écoulement d'air (14) est acheminé vers l'humidificateur (10) avec une pression de vapeur inférieure à la pression de vapeur dudit écoulement d'eau (13).

16. Procédé selon l'une des revendications 13 à 15, **caractérisé en ce que** ledit écoulement d'eau (13) est acheminé vers ledit humidificateur (10) à une température inférieure à la température dudit écoulement d'air (14).

17. Procédé selon l'une des revendications 13 à 16, **caractérisé en ce que** ledit écoulement d'eau (13) est un écoulement d'eau de mer.

18. Procédé selon l'une des revendications 13 à 17, **caractérisé en ce qu'**il comprend une étape de condensation, dans laquelle la vapeur d'eau présente dans l'air humidifié (30) introduit dans la serre est condensée dans un condenseur (35) pour produire du condensat (36).

19. Procédé selon la revendication 18, **caractérisé en ce que** ladite étape de condensation comprend une étape d'échange de chaleur entre l'air humidifié (30) extrait de la serre et un fluide de refroidissement (38) ayant une température inférieure à la température dudit air humidifié.

20. Procédé selon la revendication 19, **caractérisé en ce que** ledit fluide de refroidissement (38) est extrait dudit écoulement d'eau (13) en amont dudit humidificateur (10).

21. Procédé selon l'une des revendications 18 à 20, **caractérisé en ce que** ladite étape d'humidification et ladite étape de condensation sont exécutées d'une manière sensiblement continue et simultanée à des extrémités opposées de la serre.

22. Procédé selon l'une des revendications 18 à 21, **caractérisé en ce qu'**il comprend une étape consistant à irriguer les plantes positionnées dans la serre, au moyen du condensat.

23. Procédé selon l'une des revendications 18 à 22, **caractérisé en ce qu'**il comprend une étape de recirculation, dans laquelle l'air quittant le condenseur (35) est recueilli et acheminé vers l'humidificateur (10).

24. Procédé selon l'une des revendications 18 à 23, **caractérisé en ce que** l'air quittant le condenseur (35) est envoyé refroidir un toit (6) de la serre.
